# EUROPEAN PATENT APPLICATION

(11) **EP 4 800 986 A1**
(43) Date of publication of application: **02.09.2026**
(21) Application number: 25160799.0
(22) Date of filing: 28.02.2025
(51) Int. Cl.: H04L 12/46, H04L 12/40, H04L 69/08

(54) **COMMUNICATION DEVICE AND METHOD FOR THE COMMUNICATION DEVICE**

(71) Applicant: NXP B.V., 5656 AG Eindhoven (NL)
(72) Inventor: Walrant, Thierry G. C., 5656 AG Eindhoven (NL); Elend, Bernd Uwe Gerhard, 5656 AG Eindhoven (NL)
(74) Representative: Schmütz, Christian Klaus Johannes

(57) **Abstract**

The present disclosure relates to a communication device, wherein the communication device is configured to receive a CAN frame via the CAN interface, the CAN frame comprises a first stream packet comprising a first stream data field and a first header, which comprises a plurality of common header fields and a plurality of first header fields, wherein the processing unit is configured to create a second stream packet corresponding to the first stream packet except for the first header fields, such that the second stream packet comprises the first stream data field and a second header comprising the common header fields and, in place of the first header fields, at least one second header field, wherein the processing unit is configured to create an Ethernet frame comprising the second stream packet as a payload, wherein the processing unit is configured to create a destination MAC address and a source MAC address of the Ethernet frame based on at least one of the plurality of first header fields, and wherein the communication device is configured to send the Ethernet frame via the Ethernet interface.

## Description

### TECHNICAL FIELD

The present disclosure relates to a communication device and a method for the communication device.

### BACKGROUND

Modern automobiles include various electronic control units (ECUs) that implement, for example, engine control, power train control, airbag systems, antilock brake systems, cruise control, electric power steering, audio systems, window control systems, door control systems, mirror adjustment systems, and battery and recharging systems for hybrid/electric cars. The ECUs communicate with each other in an automobile via in-vehicle network (IVN) technologies such as Ethernet or Controller Area Networks.

It will be appreciated that a Controller Area Network (CAN) also has application outside of the field of automobiles. A CAN system may include multiple CAN nodes, wherein each CAN node may be a part of a device like an ECU. Several CAN nodes may be connected to a joint CAN bus, such that the CAN nodes can communicate among each other over the CAN bus using a CAN protocol. The CAN protocol is used to enable communications between the various CAN nodes. The data link layer of the CAN protocol is standardized as International Standards Organization (ISO) 11898-1:2003. CAN Flexible Data-Rate or "CAN FD" is an extension of the standardized CAN data link layer protocol and is integrated into the ISO11898-1:2015 standard. CAN FD may provide higher data rates. The standardized CAN data link layer protocol is being further extended to provide even higher data rates. A further extension, referred to as CAN XL, with an optional level scheme on the physical layer allowing even higher data rates, standardization in the form of ISO11898-1:2024.

Ethernet is a well-known technology, and the Institute of Electrical and Electronic Engineers (IEEE) 802.3 Working Group is a collection of standards that define physical layer and data link layer media access control for wired Ethernet. An emerging IEEE standard that may be particularly applicable to in-vehicle networks is IEEE 802.3cg, which is a protocol for 10 Mb/s single twisted-pair Ethernet, also referred to as 10BASE-T1S, that enables multiple devices to connect to the same twisted-pair wire, also referred to as a "shared media". The IEEE 802.3cg physical layer can utilize Physical Layer Collision Avoidance (PLCA) for media access control.

The IEEE 1722 is a Layer-2 transport protocol for audio and video data, and in particular also for control data. The version IEEE1722b considers among other interface SPI to which control data can be transported. The IEEE 1722 protocol may also be referred to as AVTP. AVTP provides rules to encapsulate audio and video data into a predefined frame format, which may also be referred to as a stream package. AVTP may support time stamping of stream packages to indicate a time reference for receiver nodes to process the provided information in due course and for example to play an audio signal based on audio data at a desired play time.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements.
Figure 1 shows an example of a simplified block diagram of the communication system.
Figure 2 shows an example of a simplified CAN FD frame.
Figure 3 shows an example of a simplified Ethernet frame.
Figure 4 shows an example of a simplified second stream packet.
Figure 5 shows an example of a simplified first stream packet.
Figure 6 shows an example of a simplified flow chart.

### DESCRIPTION OF EMBODIMENTS

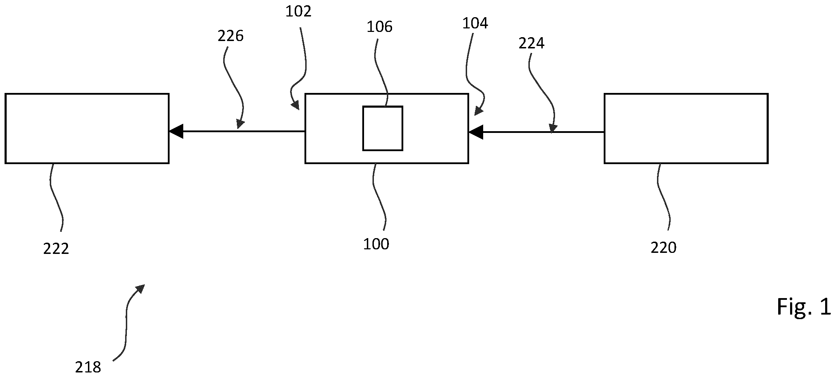

Figure 1 schematically illustrates an example of a communication system 218. The communication system 218 may comprise an Ethernet node 222 and a CAN node 220. The Ethernet node 222 may also be referred to as an Ethernet device 222. The CAN node 220 may also be referred to as CAN device 220. In addition, the communication system 218 may comprise a device 100, which may also be referred to as a communication device 100. In an example, the communication device 100 may also be referred to as a communication bridge or as a communication gateway.

The following explanations in connection with the communication device 100 may refer to both a configuration of the communication device 100 that is part of the communication system 218 and to a further configuration of the communication device 100 that is not part of the communication system 218. The following explanations regarding one of the configurations of the communication device 100 should therefore apply analogously to the other configuration of the communication device 100. For example, if advantageous features, technical effects and/or advantages are explained in connection with the communication device 100 of the communication system 218, then the advantageous features, technical effects and/or advantages shall apply in an analogous manner to a communication device 100 that is not part of the communication system 218. The same shall apply vice versa.

The communication device 100 comprises an Ethernet interface 102 and a CAN interface 104. In addition, the communication device 100 comprises a processing unit 106. The processing unit 106 may comprise a processor configured for data processing. The processing unit 106 and/or the communication device 100 may comprise a memory unit for storing data. In an example, software may be stored by the processing unit 106. The processing unit 106 may be configured to perform predefined data processing operations based on the software via the processor to process data.

In an example, the Ethernet interface 102 of the communication device 100 may be configured to be coupled to the Ethernet node 222 via an Ethernet connection 226. The Ethernet interface 102 may be configured to receive and/or transmit Ethernet data. In an example, the communication device 100 may be configured to send or receive an Ethernet frame 138 via the Ethernet interface 102. The Ethernet frame 138 may be a frame according to the IEEE 802.3 standard. The Ethernet connection 226 may be formed by a twisted pair of wires, for example. The Ethernet connection 226 may extend from the Ethernet interface 102 of the communication device 100 to the Ethernet node 222. The Ethernet frame 138 may be transmitted from the communication device 100 to the Ethernet node 222, or vice versa, via the Ethernet connection 226.

In an example, the CAN interface 104 of the communication device 100 may be configured to be coupled to the CAN node 220 via a CAN connection 224. The CAN connection 224 may be a CAN bus in an example. A plurality of CAN nodes may be coupled to the CAN bus. For the example in Figure 1, only one CAN node 220 is referred to, although in another example there may be a plurality of CAN nodes that may be connected to the CAN bus.

The CAN interface 104 of the communication device 100 may be configured to receive or transmit a CAN frame 108. The CAN interface 104 may be configured as a CAN bus interface. In an example, the communication device 100 may be configured to receive or transmit a CAN frame 108 via the CAN interface 104. The CAN frame 108 may be a frame according to the CAN FD protocol or another CAN protocol. The CAN connection 224 may be formed, for example, by a twisted pair of wires. The CAN connection 224 may extend from the CAN interface 104 of the communication device 100 to the CAN node 220. The CAN connection 224 may be used to transmit the CAN frame 108 from the CAN node 220 to the communication device 100, or vice versa.

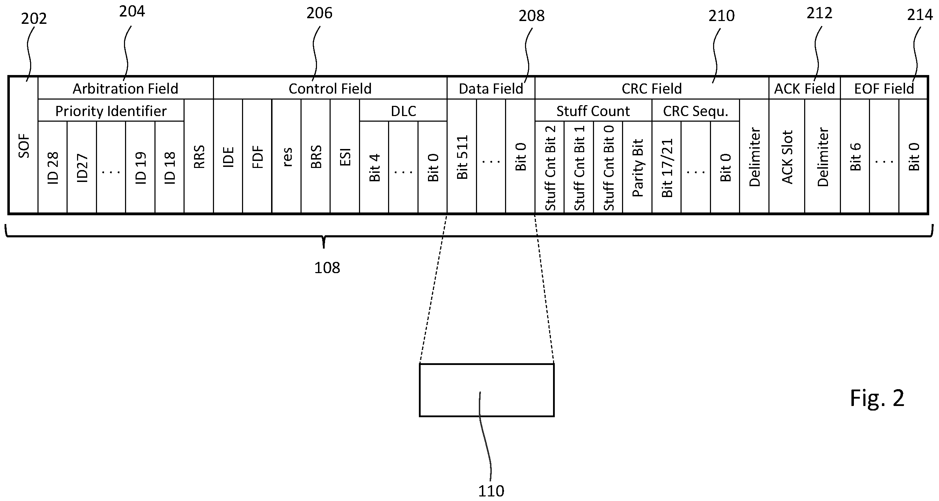

Figure 2 schematically shows an example of a CAN frame 108. The CAN frame 108 from Figure 2 may be configured, for example, as a CAN frame according to the CAN FD protocol. The CAN frame 108 may be comprised of a start-of-frame, SOF, field 202, an arbitration field 204, a control field 206, a data field 208, a cycle redundancy check, CRC, field 210, an acknowledge, ACK, field 212, and an end-of-frame, EOF, field 214. The arbitration field 204 may comprise an identifier representing the priority of the CAN frame 108. The data field 208 of the CAN frame 108 may comprise 64 bytes (or 512 bits).

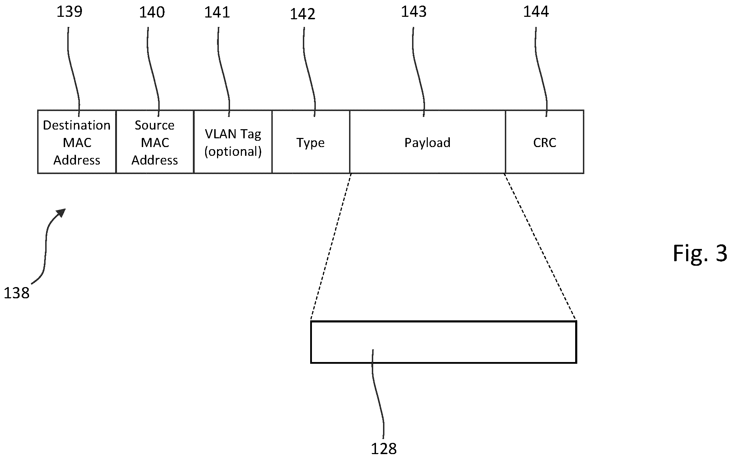

Figure 3 schematically shows an example of an Ethernet frame 138. The Ethernet frame 138 from Figure 3 may be, for example, an Ethernet frame according to the IEEE 802.3 standard. The Ethernet frame 138 may be comprised of, for example, a destination MAC address 139, a source MAC address 140, a VLAN TagTag field 141, a type field 142, a payload field 143, and a CRC field 144. The payload field 143 may also be referred to as a user data field 143. The CRC field 144 may also be referred to as FCS field. The type field 142 may also be referred to as EtherType field.

In order to transmit audio and/or video data as a data stream via Ethernet frames 138, the protocol according to IEEE 1722/1772b may be used, which is also referred to as an AVT protocol. The audio and/or video data may relate to audio and/or video control data, in particular only to audio control data and/or video control data. In another example, the audio and/or video data may be replaced by any other data, in particular any control data. Control data may be in any format, for example I2C, SPI, UART, PWM, GPIO, etc. The further explanation in connection with audio and/or video data may apply in an analogous manner to the non-audio/video data (replacing the audio and/or video data), in particular in an analogous manner to control data.

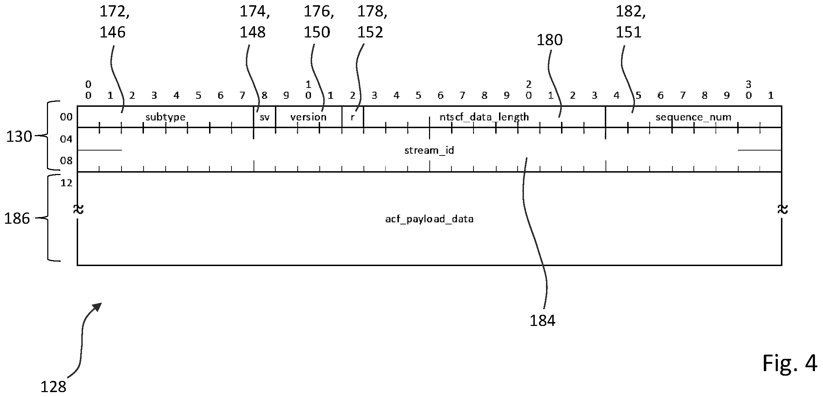

Figure 4 schematically shows an example of a data packet 128 according to the AVT protocol. The data packet 128 is also referred to as the second stream packet 128. The second stream packet 128 may form the data of the payload field 143 of the Ethernet frame 138. As an effect, the second stream packet 128 may be encapsulated in the payload field 143 of the Ethernet frame 138. Encapsulation of the stream packet 128 maintains the sequence and/or structure of the data, in particular the associated bits, of the second stream packet 128 during transmission via an Ethernet frame 138.

To create an Ethernet data stream for transmitting audio data and/or video data, for example via the Ethernet connection 226 from Figure 1, a plurality of second stream packets 128 may be transmitted via a corresponding number of Ethernet frames 138. In a communication system 218, such as that shown schematically in Figure 1, for example, it may be challenging to create a corresponding number of Ethernet frames 138 for an Ethernet data stream. The reason for the challenge may be, for example, the limited data transfer rate and/or the limited amount of data per CAN frame 108. It was explained earlier in connection with Figure 1 that a CAN connection 224 may be established between the CAN node 220 and the CAN interface 104 of the CAN communication device 100. CAN frames 108, which may be each configured in the CAN FD format, for example, can be transmitted from the CAN node 220 to the CAN interface 104 of the communication device 100 via the CAN connection 224. The data field 208 of a CAN frame 108 configured according to the CAN FD format, may comprise 512 bits or 64 bytes.

To address the challenge mentioned above, an attempt could be made (not pursued further in the present publication) to transmit an Ethernet frame 138 completely via the data field 208 of a CAN frame 108 from the CAN node 220 to the CAN interface 104 of the communication device 100. In an example, the CAN frame 108 may be considered as a CAN FD frame. However, this attempt would result in only a small amount of audio and/or video data being transmitted, which would be encapsulated in a second stream packet 128, which in turn is comprised of the payload field 143 of the Ethernet frame 138. For said attempt, it should be noted that the destination MAC address 139, the source MAC address 140, the VLAN Tag field 141, the type field 142, and the CRC field 144 of the Ethernet frame 138 already consumes 22 bytes together. If the Ethernet frame 138 is comprised by the data field 208 of the CAN frame 108 (in CAN FD format) according to the above-mentioned attempt, then only 42 bytes of the CAN frame 108 would be available for the payload field 143 of the Ethernet frame 138. Furthermore, it is assumed for the experiment that a second stream packet 128 is comprised by the payload field 143 of the Ethernet frame 138.

An example of the second stream packet 128 is shown schematically in Figure 4. From the example in Figure 4, it can be seen that the second stream packet 128 may comprise a second header 130 and a stream payload field 186. The stream payload field 186 may represent audio data and/or video data. The second header 130 may comprise 12 bytes. As an effect, only 30 bytes would remain for audio data and/or video data (being represented by the second stream data field 186). The explained attempt shows that tunneling of Ethernet frames 138 in data fields 208 of CAN frames 108 to create a stream of Ethernet frames 138 over an Ethernet connection 225 results in a low data transmission rate for audio data and/or video data.

The following relates to a proposed solution for improving the data transmission rate of audio data and/or video data if the transmission is performed sequentially and at least indirectly via both a CAN connection 224 and an Ethernet connection 226.

The communication device 100 may be used to improve the transmission rate. The transmission rate may also be referred to as net transmission rate. The communication device 100 comprises the Ethernet interface 102, the CAN interface 104, and the processing unit 106. The communication device 100 is configured to receive a CAN frame 108 via the CAN interface 104. In an example, the CAN node 220 may be configured to create the CAN frame 108 and/or to transmit the CAN frame 108 via the CAN connection 224 to the CAN interface 104 of the communication device 100.

The CAN frame 108 comprises a data field 208, also referred to as a payload field 208. The CAN frame 108 may comprise as a payload a (further) data packet 110, also referred to as a first stream packet 110. The first stream packet 110 may be embedded in the data field 208 of the CAN frame 108. In an example, the data of the first stream packet 110 is the only data comprised by the data field 208. As an effect, the first stream packet 110 may form the data field 208.

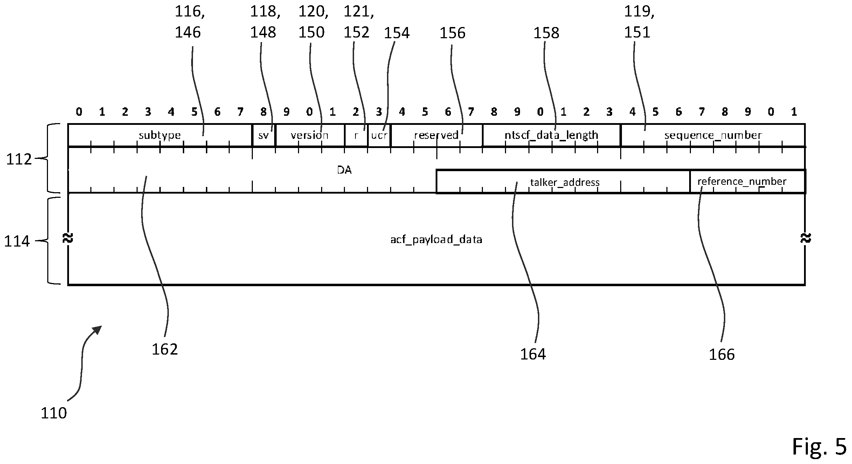

Figure 5 schematically illustrates an example of the first stream packet 110. The first stream packet 110 comprises a first header 112 and a first stream data field 114. In an example, the first stream packet 110 is formed exclusively from the first header 112 and the first stream data field 114. The first header 112 may comprise 12 bytes, in particular exactly 12 bytes. In an example, the first stream data field 114 may comprise up to 52 bytes. As an effect, the first stream packet 110 may comprise more than 12 bytes and a maximum of 64 bytes. As a further effect, the first stream packet 110 may be completely comprised by the data field 208 of the CAN frame 108.

In an example, the first header 112 of the first stream packet 110 may comprise the following fields: subtype field 116, stream ID valid (SV) field 118, version field 120, first reserved (r) field 121, header format (UCR) field 154, second reserved field 156, data length field 158, sequence number field 119, target address field 162, talker address field 164, and reference number field 166.

The subtype field 116 may represent protocol-specific information. In this sense, the protocol may relate to the IEEE 1722 protocol. The SV field 118 may be used to represent whether a stream ID is valid or not. The version field 120 may be a version number. The first reserved field 121 may be a revision number, may be used for any other purpose and/or future usage. The UCR field 154 may indicate and/or represent a format of the first header 112. The second reserved field 156 may be used for any purpose and/or future usage. The data length field 158 may represent the number of bits of the first stream data field 114. The sequence number field 119 represents a sequence number. The target address field 162 may represent a number that can be used to reconstruct a destination MAC address. The destination MAC address may be the MAC address of the Ethernet node 222. The talker address field 164 may be an address and/or a CAN identifier of the CAN node 220. The reference number field 166 may represent a unique reference number. If a plurality of CAN frames 108 are transmitted sequentially over the CAN connection 224, then each CAN frame 108 may have a first stream packet 110 comprised in the associated data field 208, wherein each stream packet 110 may have the same unique reference number 166 and/or wherein the first stream packets 110 may have consecutive sequence numbers.

The first stream data field 114 of the first stream packet 110 may be a data field that represents audio data and/or video data. The audio data and/or video data may represent an audio sequence and/or video sequence. A stream may consist of a plurality of sequences, in particular a plurality of audio sequences and/or a plurality of video sequences. Each sequence may be represented by an associated, dedicated first stream data field 114. A plurality of first stream packets 110 may represent a plurality of sequences of a stream through the associated first stream data fields 114. In an example, a corresponding plurality of CAN frames 108 may be transmitted over the CAN connection 224 from the CAN node 220 to the CAN interface 104 of the communication device 100. By transmitting the CAN frames 108 one after the other over the CAN connection 224, the stream or the associated sequences can be transmitted in a similar manner over the CAN connection 224.

It was explained above that Figure 4 schematically shows an example of the second stream packet 128. The second stream packet 128 comprises a second header 130 and a second stream data field 186. In an example, the second stream packet 128 is formed exclusively by the second header 130 and the second stream data field 186. The second header may comprise 12 bytes, in particular exactly 12 bytes. In an example, the second stream data field 186 may comprise up to 52 bytes. As an effect, the second stream packet 128 may comprise more than 12 bytes and a maximum of 64 bytes. In an example, the data amount of the second stream packet 128 may be identical to the data amount of the first stream packet 110.

In an example, the second header 130 of the second stream packet 128 may comprise the following fields: subtype field 172, stream ID valid (SV) field 174, version field 176, first reserved (r) field 178, data length field 180, sequence number field 182, and stream identifier (stream ID) field 184.

The subtype field 172 may represent protocol-specific information. In this sense, the protocol may concern the Ethernet protocol, which may be used to transmit an Ethernet frame 138 over the Ethernet connection 226. The SV field 174 may represent whether a stream ID is valid or not. The version field 176 may be a version number. The first reserved field 178 may be a revision number, may be used for any other purpose and/or future usage. The data length field 180 may represent the number of bytes of the second stream data field 186. The data length field 180 may also be referred to as second data length field 180. The sequence number field 182 may represent a sequence number. The stream ID field 184 may be a unique number identifying a stream.

In an example, the second stream packet 128 is configured in accordance with IEEE Standard 1722-2016 or a subsequent version of IEEE Standard 1722. The arrangement, number of bits, and/or meaning of fields 172-186 of the second header of the second stream packet 128 may be configured in an example according to IEEE Standard 1722-2016 or a subsequent version of IEEE Standard 1722.

The second stream data field 186 of the second stream packet 128 may be a data field representing audio data and/or video data. The audio data and/or video data may represent an audio sequence and/or video sequences. As previously mentioned, a stream may consist of a plurality of sequences, in particular a plurality of audio sequences and/or a plurality of video sequences. Each sequence may be represented by an associated, dedicated second stream data field 186. A plurality of second stream packets 128 may represent a plurality of sequences of a stream. **In** an example, a corresponding plurality of Ethernet frames 138 may be transmitted over the Ethernet connection 226 from the Ethernet interface 102 of the communication device 100 to the Ethernet node 222. By transmitting the Ethernet frames 138 one after the other over the Ethernet connection 226, the stream or the associated sequences may be transmitted in an analogous manner over the Ethernet connection 226.

Based on the above explanations and/or based on Figures 4 and 5, it can be derived that the first stream packet 110 from Figure 5 and the second stream packet 128 from Figure 4 may comprise several identical header fields 146, 148, 150, 151, 152. These same header fields 146, 148, 150, 151, 152 may be, for example, the subtype field 146 (or 116, 172), the SV field 148 (or 118, 174), the version field 150 (or 120, 176), the sequence number field 151 (or 119, 182), and/or the first reserved field 152 (or 121, 178). The header fields 146, 148, 150, 151, 152 that are identical in both stream packets 110, 128 may also be referred to as common header fields 146, 148, 150, 151, 152, as multi header fields 146, 148, 150, 151, 152, or as primary header fields 146, 148, 150, 151, 152. **In** an example, the common header fields 146, 148, 150, 151, 152 may comprise at least one of the following fields: subtype field 146 (or 116, 172), SV field 148 (or 118, 174), the version field 150 (or 120, 176), the sequence number field 151 (or 119, 182), and/or the first reserved field 152 (or 121, 178)

The CAN frame 108 that can be received by the communication device 100 via the CAN interface 104 comprises a first header 112, wherein the first header 112 comprises a plurality of common header fields 146, 148, 150, 151, 152, and a plurality of first header fields 154, 156, 158, 162, 164, 166. For example, the common header fields 146-152 of the first header 112 may be comprised of the subtype field 146, 116, the SV field 148, 118, the version field 150, 120, the sequence number field 119, 151, and the first reserved field 152, 121. For example, the first header fields 154-166 of the first header 112 may comprise the UCR field 154, the second reserved field 156, the first data length field 158, the target address field 162, the talker address field 164, and the reference number field 166. In an example, the first header fields 154-166 may comprise at least one of the UCR field 154, the second reserved field 156, the first data length field 158, the target address field 162, the talker address field 164, and the reference number field 166.

The processing unit 106 of the communication device 100 is configured to create the second stream packet 128 based on the received first stream packet 110.

The processing unit 106 may also create the second stream packet 128 such that the second stream packet 128 comprises the first stream data field 114 as the second stream data field 186. In an example, the processing unit 106 may use the first stream data field 114 of the first stream packet 110 to create the second stream data field 186 of the second stream packet 128. In an example, the first stream data field 114 may be adopted without change as the second stream data field 186. The second stream data field 186 may be identical to the first stream data field 114. The identical adoption of the first stream data field 114 as the second stream data field 186 for the second stream packet 128 may allow to minimize the processing load of the processing unit 106, in particular the processing load for creating the second stream packet 128. As an effect, the second stream data field 186 may be efficiently created based on the first stream data field 114 via the processing unit 106.

The processing unit 106 may also create the second stream packet 128 such that the second stream packet 128 also comprises the second header 130, which comprises the common fields 146, 148, 150, 151, 152 and at least one second header field 180, 184. The common fields 146-152 of the second header 130 of the second stream packet 128 are identical to the common fields 146-152 of the first header 112 of the first stream packet 110. In an example, the processing unit 106 may use the common fields 146-152 of the first header 112 of the first stream packet 110 to create the common fields 146-152 of the second header 130 of the second stream packet 128. In an example, the common fields 146-152 of the first header 112 may be adopted without change as the common fields 146-152 of the second header 130. As an effect, the subtype field 172 of the second header 130 may be identical to the subtype field 116 of the first header 112. As a further effect, the SV field 174 of the second header 130 may be identical to the SV field 118 of the first header 112. As a further effect, the version field 176 of the second header 130 may be identical to the version field 120 of the first header 112. As a further effect, the r-field 178 of the second header 130 may be identical to the r-field 121 of the first header 112. As a further effect, the sequence number field 182 of the second header 130 may be identical to the sequence number field 119 of the first header 112. By identically adopting the common fields 146-152 of the first header 112 as the common fields 146-152 of the second header 130, the effort, in particular the effort for creating the common fields 146-152 of the second header 130 and/or the second stream packet 128, for the processing unit 106 can be kept low. As an effect, the common fields 146-152 of the second header 130 of the second stream packet 128 may be efficiently created based on the common fields 146-152 of the first header 112 via the processing unit 106.

In an example, the processing unit 106 may be configured to create the second stream packet 128 such that the second stream packet 128 corresponds to the first stream packet 110 except for the first header fields 154-166. The processing unit 106 may be configured to create associated second header fields 180, 184 for the second stream packet 128 instead of the first header fields 156-166. In an example, the processing unit 106 may be configured to create the second stream packet 128 based on the first stream packet 110, so that the second stream packet 128 is identical to the first stream packet 110 except for the first header fields 156-166, wherein the second header fields 180, 184 replace the first header fields 156-166 that are not identically adopted. The processing unit 106 may create the second stream packet 128, for example, based on a copy of the first stream packet 110, wherein the first header fields 156-166 in the copy of the first stream packet 110 are replaced by the second header fields 180, 184 and/or overwritten, resulting in the creation of the second stream packet 128. As an effect, the data amount of the second stream packet 128 may be identical to the data amount of the first stream packet 110. As a further effect, the second stream packet 128 may be created with limited effort based on the first stream packet 110 via the processing unit 106.

In an example, the processing unit 106 is configured to create the at least one second header field 180, 184 based on at least one of the first header fields 154-166. In an example, at least one or some of the first header fields 154-166 may represent the data of the second header fields 180, 184 in a compressed, truncated or encoded form, wherein further predefined information and/or data may be required to decompress, complete and/or decode the first header fields 154-166 into the second header fields 180, 184. This information and/or data may be stored by communication device 100 and/or the processing unit 106. As an effect, the processing unit 106 may be configured in an example to create the at least one second header field 180, 184 by decompressing and/or decoding at least one or more of the first header fields 154-166 using predefined information and/or predefined data.

As explained above, the amount of data of the first stream data field 114 of the first stream packet 110 may be limited to a maximum of 52 bytes in an example. The data length field 158 of the first stream packet 110 may represent the amount of data of the first stream data field 114 (in bytes). Any data amount between 0 bytes and 52 bytes (in single-byte steps) can be represented by the data length field 158 of the first stream packet 110. For example, the data length field 158 of the first stream packet 110 may be comprised of 6 bits. The amount of data of the first stream data field 114 may be represented in an example by the data length field 158 as binary code. If the first stream data field 114 is fully utilized so that it comprises data in an amount of 52 bytes, then the amount of data (in bytes) may be represented by the binary code 110100. The binary code has six digits, so the binary code and thus the representation of the data amount of the first stream data field 114 may be comprised of the data length field 158.

It was explained earlier that the first stream data field 114 and the second stream data field 186 may be identical, so that the data amount of the first stream data field 114 may be identical to the data amount of the second stream data field 186. In an example, the first stream data field 114 may comprise a maximum of 52 bytes. As an effect, the maximum amount of data of the second stream data field 186 may also be 52 bytes. The data length field 180 of the second stream packet 128 may represent the amount of data of the second stream data field 186 in a binary code. If the second stream data field 186 comprises 52 bytes, then the data amount (in bytes) may be represented by the binary code 00000110100. The binary code may represent eleven digits. The last six digits may be represented by the binary code 110100, which may be previously obtained from the data length field 158 of the first stream packet 110. The first five digits 00000 may be added, in particular as predefined bits.

The two preceding paragraphs show in an example that the processing unit 106 may be configured to create the data length field 180 of the second stream packet 128 based on the data length field 158 of the first stream packet 110. In an example, the processing unit 106 may be configured to create the last bits, in particular the last 6 bits, of the data length field 180 of the second stream packet 128 using the bits of the data length field 158 of the first stream packet 110. The remaining bits, in particular the first 5 bits, of the data length field 180 of the second stream packet 128 may be created by the processing unit 106 using bits having the value zero. Both the data length field 158 of the first stream packet 110 and the data length field 180 of the second stream packet 128 may represent the identical amount of data, in particular of the first stream data field 114 and/or of the second stream data field 186.

It was explained above that Figure 3 schematically illustrates an example of an Ethernet frame 138. The Ethernet frame 138 may be comprised of the destination Mac address 139, the source Mac address 140, the VLAN Tag field 141, the type field 142, the payload field 143, and the CRC field 144.

The processing unit 106 of the communication device 100 may be configured to create an Ethernet frame 138 such that the second stream packet 128 is comprised as payload of the Ethernet frame 138. For example, the processing unit 106 may be configured to create the Ethernet frame 138 such that the payload field 143 entirely comprises and/or entirely embeds the second stream packet 128. In a further example, the processing unit 106 may be configured to create the Ethernet frame 138 such that the payload field 143 is formed by the second stream packet 128. As an effect, the payload field 143 may be completely formed by and/or composed of the data of the second stream packet 128.

The processing unit 106 of the communication device 100 may be configured to create the destination MAC address 139 of the Ethernet frame 138 based on at least one of a plurality of first header fields 154-166 of the first header 112 of the first stream packet 110. The destination MAC address 139 may be a field of the Ethernet frame 138, wherein the destination MAC address 139 may represent the MAC address of the Ethernet node 222.

In an example, the processing unit 106 may be configured to create the destination MAC address 139 of the Ethernet frame 138 based on the target address field 162 of the first header 112 of the first stream packet 110. In the example from Figure 5, the target address field 162 comprises a data amount of 6 bytes. The destination MAC address 139 may also comprise a data amount of 6 bytes. In an example, the processing unit 106 may be configured to create the destination MAC address 139 of the Ethernet frame 138 by the target address field 162, so that the bits of the destination MAC address 139 are identical to the bits of the target address field 162. In an example, the processing unit 106 may use the data of the target address field 162 unchanged for the destination MAC address 139. The processing unit 106 may copy the target address field 162 directly into the field of the destination MAC address 139, for example. As an effect, the target address field 162 may directly represent the destination MAC address 139. As a further effect, the processing unit 106 can create the destination MAC address 139 with limited / low processing load, in particular without using a specific table-look up and/or without manually adapted configuration of the processing unit 106 and/or communication device 100.

The processing unit 106 of the communication device 100 may be configured to create the source MAC address 140 of the Ethernet frame 138 based on at least one of a plurality of first header fields 154-166 of the first header 112 of the first stream packet 110. The source MAC address 140 may be a field of the Ethernet frame 138. The source MAC address 140 may represent a MAC address of a sender, such as a virtual MAC address of the CAN node 220.

In an example, the processing unit 106 may be configured to create the source MAC address 140 based on the talker address field 164 of the first header 112 of the first stream packet 110. The talker address field 164 may, for example, represent an address or identifier of the CAN node 220. The talker address field 164 may comprise 11 bits. As an effect, the talker address field 164 may represent a CAN identifier for identifying the CAN node 220. The source MAC address 140 of the Ethernet frame may, in an example, comprise 6 bytes. In an example, the bits of the talker address field 164 may be included in the source MAC address 140 of the Ethernet frame 138, wherein the remaining bits of the source MAC address 140 may be formed by predefined bits. The predefined bits for the source MAC address 140 may be stored by the processing unit 106 and/or the communication device 100. In an example, the predefined bits may represent a predefined Organizational Unique Identifier (OUI). In an example, the processing unit 106 of the communication device 100 may be configured to create the source MAC address 140 based on the talker address field 164 and the OUI. In this example, the source MAC address 140 may still comprises the bits of the talker address field 164, so that, for example, the CAN node 220 is identifiable based on the source MAC address 140. The source MAC address 140 may additionally or alternatively comprise an identification, in particular an identifier, allocated to the CAN interface 104.

In an example, the processing unit 106 of the communication device 100 may be configured to create the VLAN Tag field 141 and/or the type field 142 based on predefined data. The data of the VLAN Tag field 141 and/or the type field 142 may, for example, be stored by the processing unit 106 of the communication device 100.

In an example, the processing unit 106 of the communication device 100 may be configured to create the CRC field 144 based on the other data of the Ethernet frame 138.

The communication device 100 is configured to send the Ethernet frame 138 via the Ethernet interface 102. In an example, the communication device 100 may transmit the Ethernet frame 138 over the Ethernet connection 226 to the Ethernet node 222.

The amount of data in the data field 208 of the CAN frame 108 is limited, for example to a maximum of 64 bytes. In order to create the Ethernet frame 138 in response to the receipt of the CAN frame 108 via the communication device 100, it is a challenge to use as little data from the data field 208 of the CAN frame 108 as possible to create metadata of the Ethernet frame 138 and/or to create header data of the second stream packet 128. The above explanations have shown that the configuration of the first stream packet 110, which may form the data field 208 of the CAN frame 108, in combination with predefined data that may be stored by the communication device 100, is suitable for creating a complete Ethernet frame 138, wherein the payload field 143 of the Ethernet frame 138 may comprise the second stream packet 128 that is further configured in an example according to the AVTP standard IEEE 1722 or 1722b. The configuration of the first stream packet 110, which may be comprised by the data field 208 of the CAN frame 108, contributes in particular to achieving this advantage.

As an effect, the communication device 100 offers the advantage of creating the Ethernet frame 138 in response to the reception of the CAN frame 108, wherein it can be advantageously ensured that the first stream data field 114 comprises a large amount of data, for example up to 52 bytes, which is suitable to represent a sequence of an audio signal and/or video signal. As a further effect, the communication device 100 offers the advantage that a stream of a plurality of CAN frames 108 can be received in succession via the communication device 100, so that the communication device 100 may create and send an associated Ethernet frame 138 in response to each received CAN frame 108, so that the stream of a plurality of CAN frames 108 causes a stream of a plurality of Ethernet frames 138 via the communication device 100. As a further effect, the communication device 100 may be a bridge between the CAN node 220 and the Ethernet node 222. It should be noted that neither the Ethernet frame 138 nor the second stream packet 128 are comprised by the data field 208 of the CAN frame 108. Tunneling the Ethernet frame 138 or the second stream packet 128 via the data field 208 of the CAN frame 108 would (otherwise) lead to a reduction of the data transmission rate for the audio and/or video data representing sequences of an audio and/or video signal.

in the amount of data for transmitting the audio signal and/or video signal. The disadvantages arising from such tunneling, in particular with regard to the small data rate mentioned, can be overcome via the communication device 100.

In an example, the processing unit 106 is configured to create the stream ID field 184 based on the talker address field 164 and the reference number field 166. The stream ID field 184 may be comprised of 64 bits or 8 bytes. The talker address field 164 may be comprised of 11 bits. The reference number field 166 may be comprised of 5 bits or 16 bits. Together, the talker address field 164 and the reference number field 166 may be comprised of 16 bits. The processing unit 106 may be configured to create the stream ID field 184 based on the 16 bits of the two fields, that is, the talker address field 164 and the reference number field 166. A processing rule may be stored by the processing unit 106, which can be performed by the processing unit 106, wherein the processing rule maps the 16 bits onto the number of bits, in particular 64 bits, of the stream ID field 184.

In an example, the processing unit 106 may be configured to create the stream ID field 184 based on the 16 bits of the two fields, that is, the talker address field 164 and the reference number field 166, and in particular further predefined data stored by the communication device 100 and/or the processing unit 106. The stored data (used to create the stream ID field 184) may comprise predefined bits, in particular 24 bits, representing a predefined Organizational Unique Identifier (OUI). The stored data (used to create the stream ID field 184) may comprise further predefined bits, in particular 13 bits, which represent a predefined CAN channel. The CAN channel may represent the CAN connection 224. If the reference number field 166 comprises a data amount of 5 bits or less than 16 bits, then the stored data may comprise further predefined bits as filler bits, in particular such that the number of bits of the reference number field 166 and the number of filler bits total 16 bits. In an example, the processing unit 106 may be configured to create the stream ID field 184 by concatenating the bits of the OUI, the bits of the CAN channel, the bits of the talker address field 164, and the bits of the reference number field 166. In an example, the processing unit 106 may be configured to additionally also concatenate the filler bits with to form the 64 bits of the stream ID field 184.

In an example, the processing unit 106 is configured to create the source MAC address 140 based on the talker address field 164. The source MAC address 140 may be comprised of 48 bits or 6 bytes. The talker address field 164 may be comprised of 11 bits. The processing unit 106 may be configured to create the source MAC address 140 based on the bits of the talker address field 164. A processing rule may be stored in the processing unit 106 and performed by the processing unit 106, wherein the processing rule maps the 11 bits onto the number of bits, in particular 48 bits, of the source MAC address 140.

In an example, the processing unit 106 may be configured to create the source MAC address 140 based on the 11 bits of the talker address field 164 and further predefined data stored by the communication device 100 and/or the processing unit 106. The stored data (used to create the source MAC address 140) may comprise predefined bits, in particular 24 bits, representing the predefined OUI. The stored data (used to create the source MAC address 140) may comprise further predefined bits, in particular 13 bits, representing the predefined CAN channel. In an example, the processing unit 106 may be configured to create the source MAC address 140 by concatenating the bits of the OUI, the bits of the CAN channel, and the bits of the talker address Field 164.

In an example, the processing unit 106 may be configured to create the stream ID field 148 based on the (previously) created source MAC address 140 and the reference number field 166 and in particular also based on the additional filler bits. Reference is made to the preceding explanations in an analogous manner.

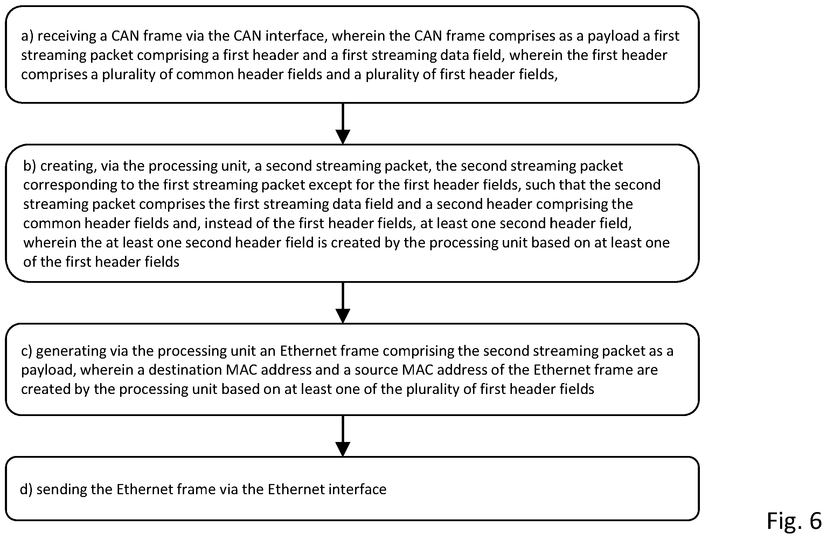

An example of a method 230 for the communication device 100 is shown schematically in Figure 6. The method 230 may be comprised of the following steps:
a) receiving a CAN frame 108 via the CAN interface 104, wherein the CAN frame 108 comprises as a payload a first stream packet 110 comprising a first header 112 and a first stream data field 114, wherein the first header 112 comprises a plurality of common header fields 146, 148, 150, 151, 152 and a plurality of first header fields 156, 158, 162, 164, 166;
b) creating, via the processing unit 106, a second stream packet128, the second stream packet 128 corresponding to the first stream packet 110 except for the first header fields 156, 158, 162, 164, 166, such that the second stream packet 128 comprises the first stream data field 114 and a second header 130 comprising the common header fields 146, 148, 150, 151, 152 and, instead of the first header fields 156, 158, 162, 164, 166, at least one second header field 180, 184, wherein the at least one second header field 180, 184 is created by the processing unit 106 based on at least one of the first header fields 156, 158, 162, 164, 166;
c) creating by the processing unit 106 an Ethernet frame 138 comprising the second stream packet 128 as a payload, wherein a destination MAC address 139 and a source MAC address 140 of the Ethernet frame 138 are created by the processing unit 106 based on at least one of the plurality of first header fields 156, 158, 162, 164, 166, and
d) sending the Ethernet frame 138 via the Ethernet interface 102.

For method 230 reference is made in an analogous manner to the above explanations, advantageous features, technical effects and advantages which have been explained in connection with the communication device 100 and/or the communication system 218.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. **In** the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. **In** a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A communication device comprising:
an Ethernet interface,
a Controller Area Network, CAN, interface, and
a processing unit,
wherein the communication device is configured to receive a CAN frame via the CAN interface,
wherein the CAN frame comprises as a payload a first stream packet comprising a first header and a first stream data field,
wherein the first header comprises a plurality of common header fields and a plurality of first header fields,
wherein the processing unit is configured to create a second stream packet corresponding to the first stream packet except for the first header fields, such that the second stream packet comprises the first stream data field and a second header comprising the common header fields and, in place of the first header fields, at least one second header field,
wherein the processing unit is configured to create the at least one second header field based on at least one of the first header fields,
wherein the processing unit is configured to create an Ethernet frame comprising the second stream packet as a payload,
wherein the processing unit is configured to create a destination MAC address and a source MAC address of the Ethernet frame based on at least one of the plurality of first header fields, and
wherein the communication device is configured to send the Ethernet frame via the Ethernet interface.

2. The communication device according to the preceding claim, wherein the first stream packet and the second stream packet comprise the same data amount.

3. The communication device according to any of the preceding claims, wherein the processing unit is configured to create the second stream packet by overwriting the first header fields with the at least one second header field.

4. The communication device according to any of the preceding claims, wherein the common header fields comprise at least one of the following fields: subtype field, stream valid field, version field, and sequence number field.

5. The communication device according to any of the preceding claims, wherein the first header fields comprise at least one field of the following fields: first data length field, target address field, talker address field, reference number field.

6. The communication device according to any of the preceding claims, wherein the at least one second header field comprises at least one field of the following fields: stream ID field, second data length field.

7. The communication device according to any of the preceding claims, if dependent on any of claims 5 and 6, wherein the processing unit is configured to create the stream ID field based on the talker address field and the reference number field.

8. The communication device according to the preceding claim, wherein the processing unit is configured to create the stream ID field based on a predefined Organizational Unique Identifier, OUI, a predefined CAN channel number, the talker address field and the reference number field.

9. The communication device according to any of the preceding claims, if depending on any of claims 5 and 6, wherein the processing unit is configured to create the destination MAC address based on the target address field.

10. The communication device according to any of the preceding claims, if depending on any of claims 5 and 6, wherein the processing unit is configured to create the source MAC address based on the talker address field and a predefined Organizational Unique Identifier, OUI.

11. A communication system comprising:
a CAN device,
an Ethernet device, and
a communication device according to any of the preceding claims,
wherein the CAN interface of the communication device is coupled to the CAN device via a CAN bus, and
wherein the Ethernet interface of the communication device is coupled to the Ethernet device via an Ethernet connection.

12. The communication system according to the preceding claim, wherein the CAN device is configured to send the CAN frame via the CAN bus to the CAN interface of the communication device.

13. The communication system according to any of the preceding claims 11 to 12, wherein the Ethernet device is configured to receive the Ethernet frame.

14. A method for a communication device comprising an Ethernet interface, a Controller Area Network, CAN, interface, and a processing unit, the method comprising the steps of:
a) receiving a CAN frame via the CAN interface, wherein the CAN frame comprises as a payload a first stream packet comprising a first header and a first stream data field, wherein the first header comprises a plurality of common header fields and a plurality of first header fields,
b) creating, via the processing unit, a second stream packet, the second stream packet corresponding to the first stream packet except for the first header fields, such that the second stream packet comprises the first stream data field and a second header comprising the common header fields and, in place of the first header fields, at least one second header field, wherein the at least one second header field is created by the processing unit based on at least one of the first header fields,
c) creating via the processing unit an Ethernet frame comprising the second stream packet as a payload, wherein a destination MAC address and a source MAC address of the Ethernet frame are created by the processing unit based on at least one of the plurality of first header fields, and
d) sending the Ethernet frame via the Ethernet interface.

15. The method according to claim 14, wherein the processing unit creates the second stream packet by overwriting the first header fields with the at least one second header field.
